# EUROPÄISCHE PATENTANMELDUNG

(11) **EP 0 744 224 A1**
(43) Veröffentlichungstag der Anmeldung: **27.11.1996**
(21) Anmeldenummer: 96104460.9
(22) Anmeldetag: 21.03.1996
(51) Int. Cl.: B08B 9/46, G01N 21/90, B65G 43/08, B67C 7/00

(54) **Vorrichtung zur Behandlung von Behältern sowie Verfahren zu deren Betrieb**

(30) Priorität: 22.05.1995 CH 507/95
(71) Anmelder: ELPATRONIC AG, CH-6303 Zug (CH)
(72) Erfinder: Müller, Martin, Dr., 8918 Unterlunkhofen (CH)

(57) **Zusammenfassung**

Bei einer Behandlungsvorrichtung zur Behandlung von Behältern (3) wird bei jedem behältertypischen Element, z.B. bei einem Transportstern (2) durch einen Sensor das Vorhandensein und die Art des Elementes von einer Steuereinrichtung (8) festgestellt. Diese Steuereinrichtung kann daher überprüfen, ob die gesamte Behandlungsvorrichtung für den jeweiligen Behältertyp richtig eingestellt ist oder nicht. Dadurch können Fehlfunktionen der Vorrichtung sicher vermieden werden.

## Beschreibung

Die Erfindung betrifft eine Vorrichtung zur Behandlung von Behältern, insbesonders Flaschen, welche an den Behältertyp angepasste Elemente und eine Steuereinrichtung umfasst. Ferner betrifft die Erfindung ein Verfahren zum Betrieb einer solchen Vorrichtung.

Vorrichtungen zur Behandlung von Behältern, insbesonders Flaschen, sind in verschiedenen Ausführungen bekannt. So zeigt z.B. die EP-A-0 579 952 eine Inspektionsvorrichtung für Flaschen, bei welcher Gasproben aus den Flaschen entnommen werden und analysiert werden. Ferner findet z.B. eine Höhenkontrolle und eine Kontrolle auf das Vorhandensein eines Deckels oder Restflüssigkeit statt. Weitere Inspektionsvorrichtungen sind bekannt, bei denen die Behälter, auch hier insbesonders Flaschen, auf Beschädigungen der Behälterwandung oder auf das Vorhandensein von Teilen im Innern des Behälters untersucht werden. Weitere bekannte Vorrichtungen zur Behandlung von Behältern sind Wasch- und Abfüllanlagen für Mehrwegflaschen. Bei allen diesen Vorrichtungen werden die Behälter auf verschiedenartigen Fördereinrichtungen gefördert und es werden von der Behälterform und -grösse abhängige Behandlungselemente für die Behälter, insbesonders Mess- und/oder Prüfungseinrichtungen vorgesehen. Diejenigen Elemente der Transport- und Fördereinrichtungen, welche vom Behältertyp bzw. von der Behältergrösse abhängig sind, wie z.B. Transportsterne, werden als Formatteile bezeichnet. Diese Formatteile müssen jeweils bei der Behandlung eines anderen Behältertyps gewechselt werden. Auch die Messeinrichtungen und/oder Prüfungseinrichtungen für die Behälter müssen zum Teil an die verschiedenen Behältertypen angepasst werden, so z.B. ein Detektor für die Behälterhöhe, ein Detektor für das Vorhandensein eines Deckels oder eine optische Prüfeinrichtung für einen Behälter.

Die Umstellung auf andere Behälter- bzw. Flaschentypen (Grösse und/oder Form) bedingt dabei ein Auswechseln der Formatteile, eine Umstellung der Mess- und Prüfeinrichtungen (als weitere Beispiele seien hier eine Volumenmessung, eine Dichtigkeitsmessung, eine Flaschengeometriemessung und eine im weiteren Sinne auch noch den Messeinrichtungen zuzuordnende Lese- und Schreibeinrichtung für einen Code auf dem Behälter aufgeführt). Die Anpassung an die verschiedenen Behältertypen bedingt dabei einerseits mechanische Verstellungen durch Auswechseln von Formatteilen oder durch Aenderung der Lage von Teilen der Messeinrichtungen, z.B. die Verstellung der Position der Kamera eines Bilderfassungssystems. Ferner werden elektrische Einstellungen nötig, um die Parametersätze der Vorrichtung zu ändern. Dies wird normalerweise am Bedienpult der Vorrichtung vorgenommen. Wird nun einer dieser Vorgänge nicht oder nicht richtig ausgeführt, so kann einerseits ein ungewollter Maschinenstillstand (crash) auftreten oder die Maschine kann Flaschen ungerechtfertigterweise auswerfen (Fehlauswürfe) und/oder im schlimmsten Fall führt die Maschine gewisse Inspektionsfunktionen nur ungenügend durch.

In der DE-A-42 42 925 wird das maschinelle Auswechseln von Formatteilen beschrieben. Dies soll das mühevolle manuelle Auswechseln von Formatteilen vereinfachen, hindert aber nicht, dass falsche, nicht an den Behältertyp angepasste Formatteile eingesetzt werden. Die DE-C-34 32 590 beschlägt das schnelle Auswechseln von Formatteilen und deren Halten durch Schnellspanneinrichtungen. Auch hierbei wird das Problem von Falscheinstellungen bzw. falschen Formatteilen nicht behandelt. Bei auf dem Markt erhältlichen Inspektionsvorrichtungen ist es bekannt, die Formatteile mit farbigen Symbolen oder mit Zahlen zu markieren, um ein fehlerhaftes Einsetzen von Formatteilen zu verhindern. Fehlbedienungen können aber trotzdem vorkommen.

Der Erfindung liegt deshalb die Aufgabe zugrunde, eine Vorrichtung zur Behandlung von Behältern zu schaffen, bei welcher eine richtige Anpassung an den Behältertyp jedenfalls gewährleistet ist, so dass keine Fehlfunktionen der Vorrichtung auftreten können.

Dies wird bei einer Vorrichtung der eingangs genannten Art dadurch erreicht, dass alle Elemente mittels Sensoren von der Steuereinrichtung überwachbar und identifizierbar sind.

Auf diese Weise wird sichergestellt, dass die Vorrichtung nicht anlaufen kann, wenn eines der Elemente nicht zu dem Behältertyp passt oder nicht richtig eingesetzt ist. Die Ueberwachung und Identifikation der Elemente löst daher das Problem auf sichere Weise.

Entsprechend wird das Verfahren zum Betrieb der Vorrichtung so durchgeführt, dass die Steuereinrichtung die Elemente identifiziert und überwacht.

Es ergeben sich daraus verschiedene Ausführungsformen für den Betrieb der Maschine. Bei einer Ausführungsform wird von der Steuereinrichtung lediglich ein Fehlersignal erzeugt, wenn ein Element, insbesondere ein Formatteil falsch eingesetzt oder ausgewählt worden ist. Da die Steuereinrichtung die Information hat, welches der Formatteile nicht richtig identifizierbar und überwachbar ist, kann das Fehlersignal genau angeben, welches der Formatteile noch richtig auszuwählen oder anzuordnen ist.

Bei einer weiteren Ausführungsvariante des Betriebsverfahrens kann die Steuereinrichtung aufgrund der eingesetzten Formatteile erkennen, was für ein Behältertyp der Vorrichtung im Betrieb zugeführt werden wird und kann die entsprechenden Parameter für die Mess- und Prüfeinrichtungen aus einem Speicher abrufen.

Nachfolgend werden Ausführungsbeispiele der Erfindung anhand der einzigen Figur erläutert. Diese zeigt grobschematisch eine Vorrichtung gemäss der Erfindung.

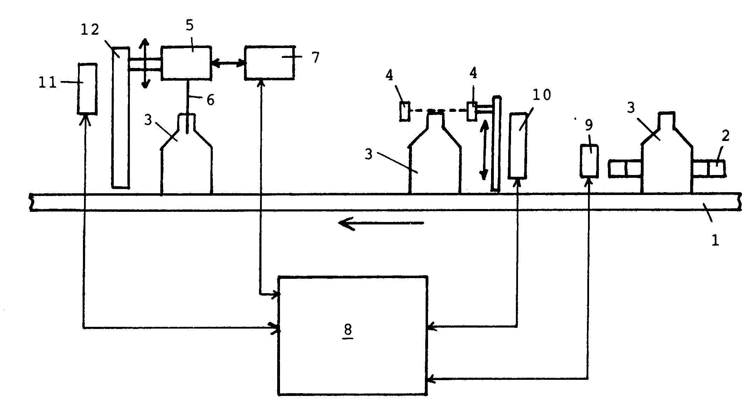

In der Figur ist schematisch eine Vorrichtung zur Prüfung von Flaschen dargestellt, welche eine Fördereinrichtung für die Flaschen aufweist, welche in Pfeilrichtung durch die Vorrichtung gefördert werden. Die Fördereinrichtung ist in der grobschematischen Darstellung von Figur 1 lediglich als lineare Strecke 1 dargestellt. Die Fördereinrichtung kann natürlich eine beliebige bekannte Einrichtung zur Behälterförderung sein und geradlinige und gekrümmte Fördermittel verschiedenster Ausgestaltung aufweisen. Es kann z.B. eine Karussellfördereinrichtung vorgesehen sein oder eine Fördereinrichtung mit Transportschnecken usw. In Figur 1 ist dazu als Beispiel ein Transportstern 2 für die Behälter 3 angedeutet. Der Transportstern ist ein Formatteil, welches in Abhängigkeit vom Behältertyp ausgewechselt werden muss, damit eine ordnungsgemässe Erfassung und Behandlung des jeweiligen Behälters sichergestellt ist. Als nächstes ist entlang der Förderstrecke 1 schematisch eine Prüfeinrichtung für die Behälterhöhe dargestellt, welche eine in der Höhe einstellbare Lichtschranke 4 umfasst. Auch hierbei muss eine Anpassung an den Behältertyp mindestens durch Verstellung der Höhe der Lichtschranke erfolgen. Weiter ist entlang der Förderstrecke als Beispiel eine Messeinrichtung 5 gezeigt, welche mittels eines Saugrohres 6 Gasproben aus dem Behälter 3 entnimmt und analysiert, wozu eine spezielle Analyseeinrichtung 7 vorgesehen sein kann, welche indes auch Teil der Steuereinrichtung 8 der ganzen Vorrichtung sein kann. Auch die Messeinrichtung 5 ist an den jeweiligen Behältertyp angepasst, und führt in der Regel eine Auf- und Abbewegung durch, um das Saugrohr 6 in den Behälter einzutauchen und wieder aus dem Behälter herauszuziehen. Natürlich könnte die Behandlungsvorrichtung für die Behälter noch eine Vielzahl weiterer in der Einleitung erwähnter oder sonstiger Formatteile bzw. Mess- und Prüfeinrichtungen umfassen. Alle diese hier nicht gezeigten Elemente können auf analoge Weise gemäss der Erfindung vorgesehen sein. Diese beinhaltet, dass die einzelnen Elemente durch die Steuereinrichtung überwachbar und identifizierbar sind. Zu diesem Zweck ist bei jedem Element ein entsprechender Sensor vorgesehen. Beim Formatteil 2, dem Transportstern, können z.B. elektrische Kontakte an der Kontaktfläche zur Antriebswelle vorgesehen sein, welche durch entsprechende Kontakte an der Antriebswelle abgetastet werden, so dass die Steuereinrichtung 8 bestimmen kann, ob ein Transportstern 2 an der Antriebswelle vorhanden ist, und welcher Art bzw. von welchem Format dieser Transportstern ist. Diese Ueberwachung und Identifikation kann natürlich auch auf andere Weise erfolgen. So können z.B. am Umfang des Transportsterns Permanentmagnete angeordnet sein, die von einem entsprechenden Sensor 9 abgetastet werden, der mit der Steuereinrichtung 8 verbunden ist. Auch eine optische Ueberwachung und Identifikation mit Lichtschranken ist möglich. Generell können alle bekannten Sensoren irgendwelcher Art zur Ueberwachung und Erkennung des Elementes 2 vorgesehen sein.

Bei der dargestellten Lichtschranke 4 kann mit einem Sensor 10 von der Steuereinrichtung geprüft werden, auf welche Höhe diese Lichtschranke eingestellt ist. Der Sensor 10 kann dabei ein handelsüblicher Wegaufnehmer oder irgend ein anderes Element sein, welches die Lage der Lichtschranke 10 für die Steuereinrichtung 8 erkennbar macht. Ebenso ist bei der Messeinrichtung 5 ein Sensor 11 vorgesehen, der die Grundhöheneinstellung der Messeinrichtung 5 erkennt und diese an die Steuereinrichtung 8 meldet. Anhand der Ueberwachung und Identifikation aller Elemente, d.h. aller Formatteile und Mess- und Prüfungseinrichtungen und allfälliger sonstiger vom Behältertyp abhängiger Elemente an der Förderstrecke kann die Steuereinrichtung feststellen, ob die Vorrichtung fehlerfrei an den jeweiligen Behältertyp angepasst ist oder ob bei einem ode mehreren der Elemente ein Fehler vorliegt oder ob das Element gar nicht vorhanden ist, obwohl es dies sein sollte. So kann z.B. festgestellt werden, dass bei sonstiger richtiger Einstellung die Lichtschranke 4 zu hoch oder zu tief eingestellt ist, so dass sie entweder gar keine Aussage über den Behälter macht oder stets eine falsche Aussage. Beim Betrieb der Maschine kann nun so vorgegangen werden, dass wie bis anhin alle Formatteile von Hand gewechselt und eingestellt werden und dass auch alle sonstigen Einstellungen von Hand vorgenommen werden. Parameter für die Analyseeinrichtung 7 können dabei am Bedienungspult der Steuereinrichtung 8 gewählt werden und werden von dieser an die Analyseeinrichtung 7 abgegeben. Die Steuereinrichtung 8 kann nun vor dem Anlaufen der Vorrichtung aufgrund der Identifikation und Ueberwachung aller Elemente überprüfen, ob alle Elemente richtig vorhanden und eingestellt sind und auch ob der richtige Parametersatz für die entsprechende Behältergrösse an die Analyseeinrichtung 7 abgegeben worden ist. Liegt ein Fehler vor, so kann die Steuereinrichtung ein entsprechendes Fehlersignal abgeben und den Anlauf der Vorrichtung sperren.

Bei einer anderen Ausführungsform des Verfahrens kann auch wieder ein manueller Wechsel der Formatteile bzw. eine manuelle Einstellung der mechanischen Einstellungen vorgenommen werden. Bei der Initialisierung beim Wiedereinschalten der Vorrichtung stellt nun aber die Steuereinrichtung selber fest, welcher Behältertyp zur Behandlung vorgesehen ist. Dies kann die Steuerung aufgrund der eingesetzten Formatteile erkennen. Die Steuereinrichtung setzt nun selber alle Parameter für die Prüfung auf den richtigen Wert bzw. gibt diese Parameter an angeschlossene externe Analyseeinrichtungen, wie die Einrichtung 7, ab. Stellt hingegen die Steuereinrichtung einen Fehler bei den Formatteilen oder den manuellen Einstellungen fest, so gibt sie ein Fehlersignal ab.

Bei einer weiteren Ausgestaltung des Verfahrens wird grundsätzlich wie vorher beschrieben vorgegangen, aber solche Komponenten bzw. Elemente, welche automatisch, z.B. durch Motore an den Behältertyp angepasst werden können, werden durch die Steuereinrichtung 8 in die entsprechende Stellung gebracht. So kann z.B. die Höhe der Analyseeinrichtung 5 durch einen entsprechenden Antrieb 12, der durch die Steuereinrichtung 8 gesteuert wird, in der Höhe verfahren werden. Bei einer speziellen Ausführungsform dieses Verfahrens, bei welcher die Vorrichtung im eingeschalteten (aber nicht laufenden) Zustand eingerichtet werden kann, lässt sich der Ablauf auch durch das manuelle Auswechseln bzw. Einstellen der letzten Komponente auslösen. Das heisst, sobald die Bedienungsperson die letzte Umstellung vorgenommen hat, prüft die Steuereinrichtung von selbst, ob die gewählten Einstellungen richtig sind und nimmt von sich aus die weiteren Einstellungen (Verfahren verfahrbarer Komponenten, Auswahl der Parameter und Abgabe an die entsprechenden Baueinheiten) vor. Der Sensor des letzten sinnvoll ausgewechselten Elementes erzeugt dabei über einen "interrupt" einen entsprechenden Ablauf in der Steuereinrichtung.

## Patentansprüche

1. Vorrichtung zur Behandlung von Behältern, insbesonders Flaschen, welche an den Behältertyp angepasste Elemente und eine Steuereinrichtung umfasst, dadurch gekennzeichnet, dass alle Elemente mittels Sensoren von der Steuereinrichtung überwachbar und identifizierbar sind.

2. Vorrichtung nach Anspruch 1, dadurch gekennzeichnet, dass die Elemente Formatteile sind.

3. Vorrichtung nach Anspruch 1 oder 2, dadurch gekennzeichnet, dass die Elemente behältertypische Teile von Mess-und Prüfeinrichtungen und/oder von Lese-/Schreibeeinrichtungen sind.

4. Vorrichtung nach einem der Ansprüche 1 bis 3, dadurch gekennzeichnet, dass die Steuereinrichtung einen Speicher zur Speicherung einer Mehrzahl von behältertypischen Parametersätzen aufweist, und dass durch die Steuereinrichtung Parameter aus dem Speicher in Abhängigkeit von der Ueberwachung bzw. Identifikation der Elemente entnehmbar sind.

5. Vorrichtung nach einem der Ansprüche 1 bis 4, dadurch gekennzeichnet, dass die Ueberwachung und Identifikation durch die Abtastung elektrischer Kontakte und/oder die Erkennung magnetischer Geber und/oder durch optische Abtastung erfolgt.

6. Vorrichtung nach einem der Ansprüche 1 bis 5, dadurch gekennzeichnet, dass die Ueberwachung bei verfahrbaren Elementen mittels Wegaufnehmern erfolgt.

7. Verfahren zum Betrieb einer Vorrichtung nach einem der Ansprüche 1 bis 6, dadurch gekennzeichnet, dass die Steuereinrichtung die Elemente identifiziert und überwacht.

8. Verfahren zum Betrieb einer Vorrichtung nach Anspruch 7, dadurch gekennzeichnet, dass die Steuereinrichtung nach manueller Einstellung der Vorrichtung eine Ueberprüfung durchführt und bei Vorliegen einer Falscheinstellung ein Fehlersignal abgibt.

9. Verfahren zum Betrieb einer Vorrichtung nach einem der Ansprüche 7 oder 8, dadurch gekennzeichnet, dass die Steuereinrichtung beim Einschalten der Vorrichtung aufgrund der Formatteile den Behältertyp besetimmt und aufgrund dessen Parameter für die Mess- und/oder Prüfeinrichtungen bestimmt, bzw. beim Vorliegen widersprüchlicher Formatteile eine Fehlermeldung erzeugt.

10. Verfahren nach einem der Ansprüche 7 bis 9, dadurch gekennzeichnet, dass beim Vorhandensein automatisch verfahrbarer Elemente diese von der Steuereinrichtung aufgrund der Identifikation der manuell ausgewechselten Elemente in ihre richtige, an den erkannten Behältertyp angepasste Position verfahren werden.
